# EUROPÄISCHE PATENTANMELDUNG

(11) **EP 4 124 786 A1**
(43) Veröffentlichungstag der Anmeldung: **01.02.2023**
(21) Anmeldenummer: 22179928.1
(22) Anmeldetag: 20.06.2022
(51) Int. Cl.: F16K 7/12

(54) **MEMBRANANORDNUNG MIT QUERSCHITTSVERENGENDEN ELEMENTEN**

(30) Priorität: 27.07.2021 DE 102021119355
(71) Anmelder: SISTO Armaturen S.A., 6468 Echternach (LU)
(72) Erfinder: HACKENBERGER, Bernd, 6468 Echternach (LU); LOEW, Pascal, 6468 Echternach (LU); SICHWARDT, Paul, 6468 Echternach (LU)
(74) Vertreter: Busch, Tobias

(57) **Zusammenfassung**

Die Erfindung betrifft eine Anordnung mit einer Membran (5). Die Membran (5) weist eine Dichtfläche (17) auf, die mit einem Sitz (4) zur Trennung von Räumen (27, 28) zusammenwirkt. Die Membran (5) umfasst eine Fluidkontaktfläche (29), auf der mindestens ein Element (19) angeordnet ist, das in einen Raum (27, 28) hineinragt.

## Beschreibung

Die Erfindung betrifft eine Anordnung mit einer Membran, die eine Dichtfläche aufweist, die mit einem Sitz zur Trennung von Räumen zusammenwirkt.

Solche Membranen werden beispielsweise in Membranventilen, Membranantrieben oder Membranpumpen eingesetzt. Bei Membranventilen dichtet die Membran das Ventil vorzugsweise auf einem Dichtsteg ab. Ein solches Membranventil wird beispielsweise in der DE 195 05 747 A1 beschrieben. Bei einer Membranpumpe wird das zu fördernde Medium durch die Membran vom Antrieb getrennt. Membranantriebe kommen beispielsweise in Form pneumatischer Antriebe bei Stellarmaturen zum Einsatz. Dabei wird eine vorzugsweise mit einer Spindel gekoppelte Membran über Druckluft bewegt.

Die eingesetzten Anordnungen mit Membranen bilden bewegliche, dichtende Wände, die zwei Räume mit in der Regel unterschiedlichen Medien (Gase, Flüssigkeiten) und häufig auch unterschiedlichen Druckverhältnissen voneinander trennen.

Ein wichtiges Qualitätsmerkmal einer Anordnung mit einer Membran ist deren Beweglichkeit, das heißt die Fähigkeit senkrecht zur Einspannfläche (Membranfläche) einen Hub auszuführen, der mechanisch angetrieben bedingt sein kann oder der infolge einer Druckdifferenz erfolgen kann. Weiterhin ist die Beständigkeit der Membran von Bedeutung, insbesondere wenn aggressive Medien gefördert werden.

Die Bewegungsfähigkeit und Beständigkeit einer Membran hängt im Wesentlichen von der Werkstoffkombination ab, aus der die Membran besteht. Als Grundwerkstoffe werden hauptsächlich Elastomere verwendet, die zur Erzielung einer höheren Festigkeit mit Gewebeeinlagen verstärkt werden können. Als Elastomere haben sich Zusammensetzungen auf Basis von Ethylen-Propylen-Dien-Kautschuk (EPDM) bewährt.

Ventilkennlinien zeigen die Abhängigkeit des Durchflusses vom Ventilhub bzw. von der Ventilöffnung. Dabei hängt die Form der Ventilkennlinie von der Gestalt des Ventilsitzes sowie des Absperrkörpers ab. Vorteilhaft zum Regeln des Durchflusses sind Kennlinien, die als linear oder gleichprozentig beschrieben werden. Bei einer linearen Ventilkennlinie ist der Durchfluss direkt proportional zum Ventilhub, sofern der Druckabfall konstant ist. Gleichprozentige Kennlinien zeigen zu gleichen Hubänderungen gleiche relative Durchflussänderungen.

Membranventile, wie in der EP 3 324 084 B1 offenbart, werden aufgrund ihrer extrem nicht-linearen Ventilkennlinien selten als Regelventil eingesetzt. Durch die Bauform des Membranventils wird bereits bei geringem Öffnungsgrad ein recht großer Durchfluss ermöglicht. Zudem ändert sich der Durchfluss im Bereich von 80 - 100 % Öffnungsgrad nur noch minimal.

Bekannt sind Sonderformen von Membranventilen, die als Regelventil eingesetzt werden. Die Ventilkennlinie wird dabei über die Ausgestaltung der Membran, insbesondere über die Form der Membran, eingestellt. Die DE 10 2013 215 294 A1 offenbart eine besonders ausgeformte parabolkegelförmige Membran. Die Form der Parabolkegel erinnert dabei an die Form von klassischen Regelkegeln, die jedoch nicht mit einem Dichtsteg abdichten.

Die DE 10 2019 105 515 A1 beschreibt ein Membranventil, das eine Ventilsteuerung umfasst. Die komplexe Ventilsteuerung weist ein Stellglied und ein Korrekturglied mit einer Mehrzahl von vordefinierten Korrekturkennlinien auf. In diesem Beispiel wird mit großem und kostenintensivem Aufwand eine Membran nahezu permanent belastet, was sich nachteilig auf die Nutzungszeit der Membran auswirken kann.

Aufgabe der Erfindung ist es, eine Anordnung mit einer Membran bereitzustellen, die einen linearen Zusammenhang zwischen Membranhub und Durchfluss realisieren kann. Darüber hinaus soll die Membran den Anforderungen des dauerhaften Betriebes gerecht werden und dabei äußerst langlebige Eigenschaften bewahren. Die Membran soll sich auf möglichst preiswerte sowie besonders einfache Weise und mit einem möglichst geringen Materialausschuss herstellen lassen.

Diese Aufgabe wird erfindungsgemäß durch eine Anordnung mit einer Membran gemäß den Merkmalen des Anspruchs 1 gelöst. Bevorzugte Varianten sind den Unteransprüchen, der Beschreibung und den Figuren zu entnehmen.

Gemäß der Erfindung umfasst die Membran mindestens eine Fluidkontaktfläche, auf der mindestens ein Element angeordnet ist, das in einen Raum hineinragt.

Die Membran eines Membranventils umfasst zwei Elastomerlagen zwischen denen eine Gewebelage bzw. ein Verstärkungselement angeordnet ist. Eine stiftartig ausgebildete Membranschraube, die mit der Gewebelage verbunden ist, dient als Bewegungskontakt für das Druckstück, wodurch die Membran innerhalb des Ventils bewegt werden kann. Die Elastomerlage, die dem durch das Ventil strömenden Fluid zugewandt ist, weist eine umlaufende äußere Dichtlippe auf, die vorzugsweise den Verlauf eines Kreises beschreibt und die Fluidkontaktfläche somit umrandet. Die Fluidkontaktfläche wird bevorzugt von einer Dichtfläche in Form eines Dichtstegs, der mit dem Ventilsitz zum Abdichten bzw. Absperren des Durchflusses zusammenwirkt, in zwei Halbkreisflächen geteilt. Außerhalb der kreisrunden Dichtlippe weist die Membran eine Membranfläche mit Bohrungen zum Einspannen in das Ventil auf, an der ein Membranlappen mit Kennzeichnung angeformt ist. Im Membranlappen ist vorzugweise eine elektronische Kommunikationsschnittstelle angeordnet. Im geschlossenen Zustand trennt die Dichtfläche der Membran im Zusammenwirken mit dem Dichtsteg einen Raum des Ventils vor und einen Raum nach der Dichtfläche in Strömungsrichtung ab.

In diesen Raum ragt mindestens ein Element hinein, so dass dieses Element in einer geöffneten Ventilstellung einen Strömungswiderstand bzw. eine Strömungsbarriere darstellt. Vorteilhafterweise wird die Ventilkennlinie des Membranventils aufgrund des hineinragenden Elements verändert, so dass vorzugsweise eine lineare Abhängigkeit zwischen Ventilhub und Durchfluss entsteht.

In einer Variante der Erfindung ist das Element als Lamelle ausgebildet. Die Form des Elements ist dadurch nahezu strichförmig und bildet nur einen geringen Strömungswiderstand aus. Durch das Verändern der Lamellenhöhe und/oder der Lamellenbreite kann der Einfluss auf die Strömung variiert werden.

In einer besonders vorteilhaften Variante der Erfindung ist das Element halbmondförmig ausgebildet. Zwei spitze Enden sind über eine der Strömung entgegen gerichtete, konvexe Krümmungsfläche mit einer konkaven Krümmungsfläche verbunden. Die Krümmungsflächen grenzen an einem abgerundeten Kamm aneinander. Das Element ist somit als flächiges Gebilde mit einem größeren Strömungswiderstand im Vergleich zur Lamelle realisiert. Die Höhe des halbmondförmigen Elements dient zum gezielten Anpassen des Strömungswiderstandes und somit der Linearisierung der Ventilkennlinie des Membranventils.

In einer günstigen Variante der Erfindung ist das Element nierenförmig ausgebildet. Im Vergleich zur halbmondförmigen Ausbildung des Elements sind hier die der Dichtfläche zugewandten Flächen des Elements geradlinig und die Enden abgerundet ausgebildet. Darüber hinaus kann das Element auch kegelförmig oder doppelkegelförmig ausgebildet sein. In all diesen Varianten ist das Element ein flächiges Gebilde, das in Abhängigkeit der Gebildehöhe den Durchfluss durch das Membranventil als Strömungswiderstand reduziert und die Ventilkennlinie erfindungsgemäß linearisiert.

In einigen Varianten der Erfindung kann das Element mindestens eine Öffnung zur Durchströmung aufweisen. Hierüber ist der Strömungswiderstand, den das Element im Membranventil bewirkt, fein justiert ausgebildet. Dabei kann die Öffnung in Form eines Kanals oder als Tal im flächigen Gebilde bzw. als Furche im Element ausgeformt sein. Des Weiteren kann durch die Anzahl und die Dimensionierung der Öffnungen gezielt der Strömungswiderstand zur gewünschten Beeinflussung der Ventilkennlinie angepasst werden.

Gemäß der Erfindung ist auf zwei bezüglich der Dichtfläche gegenüberliegenden halbkreisförmigen Fluidkontaktflächen jeweils ein Element angeordnet. Vorteilhafterweise sind die Elemente spiegelbildlich zueinander ausgerichtet, wobei die Dichtfläche die Spiegelebene markiert. Hierbei wird ein gleichmäßiger Strömungswiderstand in beiden Räumen des Membranventils gebildet, wodurch Wirbelbildungen aufgrund eines ungleichmäßigen Strömungswiderstands vermieden werden.

In einer alternativen Variante der Erfindung können die Elemente bezüglich der Spiegelebene auch symmetrisch und/oder formgleich ausgerichtet sein. Symmetrisch wird hier im Sinne eines Abbildens eines geometrischen Objekts durch irgendeine Bewegung auf sich selbst verstanden.

Idealerweise ist das Element einstückig mit der Fluidkontaktfläche ausgebildet. Die Membran weist somit keine Unterbrechungen, Spalte, Risse oder Ansatzkanten auf, die durch die Strömung eines Fluids unter Dauereinwirkung eine ungewünschte Veränderung erfahren könnten. Dabei kann das Element von den Elastomerlagen umschlossen und/oder bedeckt sein.

Üblicherweise wird die Membran mit den Elementen mittels Formpressen (Compression Moulding) hergestellt. Das Formpressen ist ein Herstellungsverfahren für leicht gewölbte oder flache Bauteile. Dabei können auch thermoplastische Kunststoffe bzw. Elastomere verarbeitet werden. Zu Beginn des Verfahrens wird eine Formmasse, die in diesem Fall mindestens zwei Elastomerlagen und dazwischen angeordnete Elemente inklusive Membranschraube umfasst, in eine Kavität eingebracht, welche dann aufgeheizt wird. Anschließend wird die Kavität unter Einsatz eines Druckkolbens geschlossen. Durch den Druck erlangt die Formmasse die vom Werkzeug vorgegebene Form. Der anschließend unter Temperatureinwirkung stattfindende Vulkanisationsprozess verleiht der Membran ihre gewünschte Form und die gummi-elastischen Eigenschaften. Nach dem Abkühlen kann die fertige Membran aus dem Formwerkzeug entnommen und nach- bzw. weiterverarbeitet werden.

In einer weiteren Variante kann die Membran für die Anordnung auch über das Spritzgieß-Verfahren hergestellt werden. Das Spritzgießen (Injection-Moulding) ist ein Verfahren, bei dem mit einer Spritzgießmaschine der jeweilige Elastomer-Werkstoff plastifiziert und in eine Form, dem Spritzgusswerkzeug, unter Druck eingespritzt wird, in dem das Element bzw. die Elemente bereits angeordnet sind. Im Werkzeug geht der Elastomer-Werkstoff durch eine Vernetzungsreaktion in den festen Zustand über. Nach dem Öffnen des Werkzeugs kann das Fertigteil, die Membran mit Elementen, entnommen werden. Der Hohlraum, sprich die Kavität des Werkzeugs bestimmt dabei die Form und die Oberflächenstruktur der fertigen Membran.

In einer alternativen Variante der Erfindung ist das Element auf der Fluidkontaktfläche der Membran angeordnet. Eine solche Verbindung könnte geklebt oder mit einer Arretierung realisiert werden.

Idealerweise weist das Element Verstärkungen auf. Diese Verstärkungen können aus einem metallischen Material und/oder einem Polymer-Material ausgebildet sein. Dadurch ist das Element formbeständig und hält der Belastung strömender Fluide auch dauerhaft stand. Von besonders großem Vorteil ist die Beständigkeit der Ventilkennlinie über die Betriebszeit hinweg, wodurch beispielsweise auf regelungstechnische Korrekturmaßnahmen verzichtet werden kann.

Dabei ist es denkbar, dass die Verstärkungen einstückig mit der Gewebeeinlage oder mit den Verstärkungselementen der Membran ausgebildet sind. Darüber hinaus kann eine Verstärkung auch an die Verstärkungselemente der Membran befestigt werden, um einen dauerhaften Verbund und eine betriebssichere Fixierung zu gewährleisten. Die Verstärkungen werden dann von Elastormerlagen umschlossen und im Herstellungsprozess mit einer formschlüssigen Verbindung ausgebildet.

Erfindungsgemäß erstreckt sich das Element auf einer Fläche von mehr als 20 %, vorzugsweise mehr als 30 %, insbesondere mehr als 40 %, und/oder weniger als 90 %, vorzugsweise weniger als 80 %, insbesondere weniger als 70 %, der Fluidkontaktfläche. Das Element, das als Strömungsbarriere in den Raum der Fluidströmung ragt, ist ein flächiges Gebilde, das über einen weiten Bereich der Fluidkontaktfläche der Membran ausgebildet ist. Auf diese vorteilhafte Weise wird die Ventilkennlinie des Membranventils linear oder gleichprozentig realisiert. Darüber hinaus ist durch eine besondere Geometrie des Elements bzw. der Elemente und eine bestimmte Erstreckungsfläche auf der Fluidkontaktfläche der Membran auch eine individuelle, kundenorientierte Gestaltung der Ventilkennlinie ausführbar.

Auf der Fluidkontaktfläche ist bevorzugt eine Dichtfläche ausgebildet. Die Dichtfläche ist vorzugsweise als Dichtsteg ausgeführt, der mit dem Ventilsitz zum Abdichten bzw. Absperren des Durchflusses zusammenwirkt. Dazu ist der Dichtsteg im Vergleich zur Fluidkontaktfläche erhöht ausgebildet.

Vorzugsweise beträgt die Höhe des Elements mehr als Faktor 2, vorzugsweise mehr als Faktor 4, insbesondere mehr als Faktor 6, und/oder weniger als Faktor 12, vorzugsweise weniger als Faktor 10, insbesondere weniger als Faktor 8, in Bezug auf die Höhe der Dichtfläche. Auf diese vorteilhafte Weise kann ein Element mit einer im Hinblick auf die gewünschte Ventilkennlinie vorteilhaften Höhe auf der Fluidkontaktfläche der Membran angeordnet werden.

Die Linearisierung der Ventilkennlinie ist durch das Anordnen mindestens eines Elementes auf der Fluidkontaktfläche der Membran und die Form des Elementes besonders einfach sowie äußerst betriebssicher realisiert. Darüber hinaus ist durch eine besondere Geometrie des Elements bzw. der Elemente und eine bestimmte Erstreckungsfläche auf der Fluidkontaktfläche auch eine individuelle, kundenorientierte Gestaltung der Ventilkennlinie ausführbar. Kundenspezifische Wünsche der Ventilkennlinie können bei der Herstellung durch individuell designte Elemente erzielt werden. Des Weiteren ist ein Umrüsten bestehender Ventile durch einen Membrantausch, der ohnehin in regelmäßigen Zeitabständen erfolgen sollte, ohne Aufwand und ohne Änderung der Rohrleitungen ausführbar. Dabei ist der bestehende Ventilkörper zur Aufnahme einer Membran mit angeordneten Elementen verwendbar. Durch eine Montage mit korrektem Einbauwinkel ist die Rohrleitung inklusive Membranventil auch weiterhin selbstentleerend.

Die erfindungsgemäße Anordnung mit einer Membran ist hier bevorzugt am Beispiel Membranventil beschrieben. Eine Verwendung in Membranantrieben und Membranpumpen ist darüber hinaus vorstellbar und ausdrücklich im Rahmen der Erfindung eingeschlossen.

Weitere Merkmale und Vorteile der Erfindung ergeben sich aus der Beschreibung von Ausführungsbeispielen anhand von Zeichnungen und aus den Zeichnungen selbst.

Dabei zeigt:
- Fig. 1: eine Schnittdarstellung eines Membranventils,
- Fig. 2: eine Schnittdarstellung einer Anordnung mit einer Membran,
- Fig. 3: eine perspektivische Ansicht auf eine Membran mit lamellenförmigem Element,
- Fig. 4: eine perspektivische Ansicht auf eine Membran mit halbmondförmigem Element,
- Fig. 5: eine perspektivische Ansicht auf eine Membran mit nierenförmigem Element,
- Fig. 6: einen Detailschnitt eines Membranventils,
- Fig. 7: einen weiteren Detailschnitt eines Membranventils.

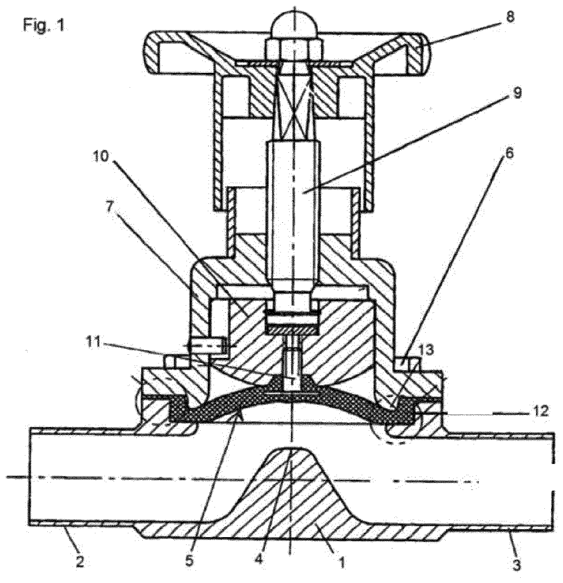

Das in Fig. 1 dargestellte Membranventil besitzt ein Gehäuseunterteil 1, welches Anschlüsse 2, 3 und einen Sitz 4 umfasst. Der Sitz 4 dient als korrespondierende Auflagefläche für die Anordnung mit einer Membran 5. Die Membran 5 ist mithilfe von Schrauben 6 eingespannt zwischen dem Gehäuseunterteil 1 und einem Gehäuseoberteil 7. Im Gehäuseoberteil 7 sind die zur Betätigung der Anordnung mit einer Membran 5 notwendigen Elemente integriert, wie beispielsweise ein Antrieb 8, der im Ausführungsbeispiel als Handrad ausgeführt ist, sowie eine Spindel 9. An der Spindel 9 ist ein Druckstück 10 befestigt. Das Druckstück 10 ist verschieblich im Gehäuseoberteil 7 angeordnet und wird von einer inneren Wand des Gehäuseoberteils 7 geführt. Durch Betätigung des Antriebs 8 wird über die Spindel 9 eine vertikale Verschiebung des Druckstücks 10 bewirkt, sodass sich die Membran 5 verformt und der freie Querschnitt zwischen dem Sitz 4 und der Membran 5 vergrößert bzw. verkleinert werden kann. Der Kontakt zwischen der Anordnung mit einer Membran 5 und dem Antrieb 8 wird verbessert durch die Verwendung eines stiftartigen Elements 11, das flächig mit der Membran 5 verbunden und mit dem Antrieb 8 beispielsweise verschraubt ist. Die Membran 5 in der Fig. 1 ist als eine gekammerte Membran 5 ausgestaltet, wobei der Randbereich 12 der Anordnung mit einer Membran 5 durch eine spezielle Fassung 13, die aus dem Gehäuseoberteil 7 und dem Gehäuseunterteil 1 gebildet wird, fixiert ist.

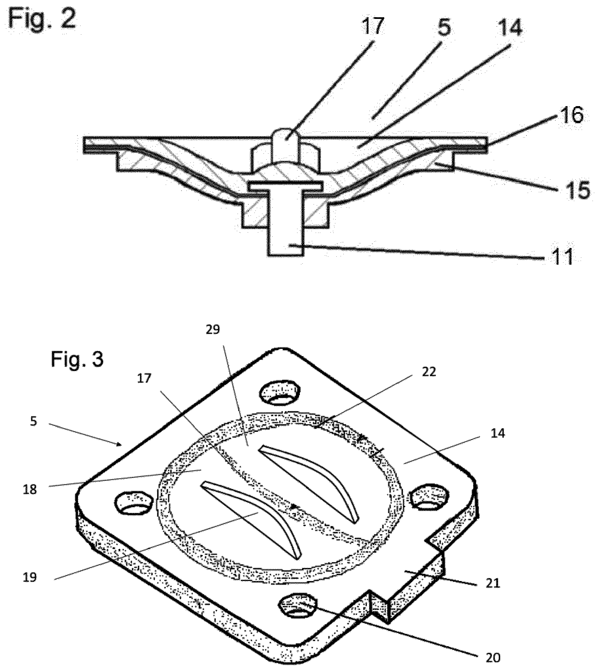

Fig. 2 zeigt eine Schnittdarstellung einer Anordnung mit einer Membran 5. Die Anordnung mit einer Membran 5 umfasst eine erste Lage 14, die auf der Fluidkontaktseite angeordnet ist. Weiterhin umfasst die Anordnung mit einer Membran 5 eine zweite Lage 15, welche die Rückseite der Anordnung bildet. Die beiden Lagen 14 und 15 sind aus einem Elastomer gefertigt. Zwischen den beiden Elastomer-Lagen 14 und 15 ist eine Gewebe-Einlage 16 angeordnet. Weiterhin umfasst die Anordnung mit einer Membran 5 das stiftartige Element 11, das im Ausführungsbeispiel als Membranschraube ausgebildet ist.

Die erste Lage 14 der Anordnung mit einer Membran 5, die der Fluidkontaktseite zugeordnet ist, weist eine Dichtfläche 17 in Form eines Dichtstegs auf. Das in Fig. 2 dargestellte stiftartige Element 11 kann ein Gewinde aufweisen. Gemäß der Darstellung in Fig. 1 ist das stiftartige Element 11 als Membranschraube ausgebildet und weist ein Außengewinde auf, das in ein Innengewinde eingeschraubt wird, welches in einem Druckstück 10 ausgebildet ist. Bei der Anordnung mit einer Membran 5, gemäß der Darstellung in Fig. 2, handelt es sich um ein Compound aus zwei Elastomer-Lagen 14, 15 und einer dazwischen angeordneten Gewebe-Einlage 16, die durch Vulkanisation miteinander verbunden sind.

In Fig. 3 ist eine perspektivische Ansicht einer Membran 5 dargestellt. Die Lage 14 weist eine umlaufende äußere Dichtlippe 22 auf, die in diesem Ausführungsbeispiel den Verlauf eines Kreises beschreibt. Die Fluidkontaktfläche 29 wird bevorzugt von einer Dichtfläche 17 in Form eines Dichtstegs, der mit dem Sitz 4 zum Abdichten bzw. Absperren des Durchflusses zusammenwirkt, in zwei Halbkreisflächen 18 geteilt. Außerhalb der kreisrunden Dichtlippe 22 weist die Membran 5 eine Membranfläche mit Bohrungen 20 zum Einspannen in das Ventil auf. Des Weiteren ist an der Anordnung mit Membran 5 ein Membranlappen 21 angeformt. Auf den zwei Halbkreisflächen 18 ist je ein Element 19 angeordnet, das in diesem Ausführungsbeispiel in der Form einer Lamelle ausgebildet ist. Die Lamelle ragt in den Raum des Ventils, der von einem Fluid durchströmt wird und bildet somit eine Strömungsbarriere, die zur Linearisierung der Ventilkennlinie führt.

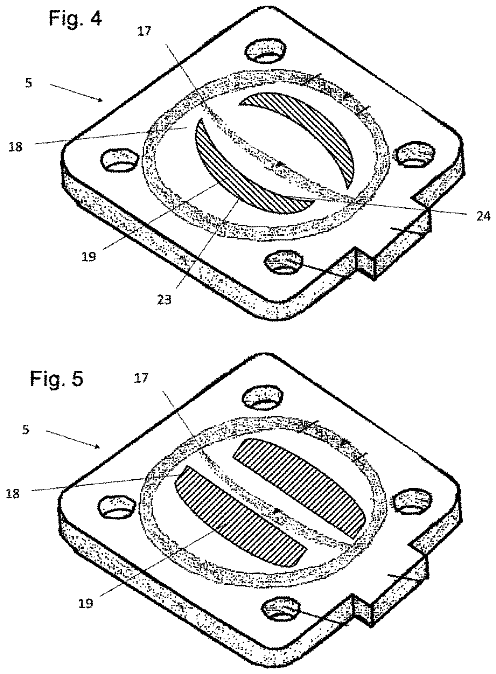

Die Fig. 4 entspricht im Wesentlichen der Fig. 3. Die Anordnung mit einer Membran 5 weist zwei Elemente 19 auf, die spiegelbildlich zueinander auf je einer Halbkreisfläche 18 angeordnet sind. Die Spiegelachse bildet die Dichtfläche 17. Das Element 19 ist in diesem Ausführungsbeispiel halbmondförmig ausgebildet. Zwei spitze Enden sind über eine der Strömung entgegen gerichtete, konvexe Krümmungsfläche 23 mit einer konkaven Krümmungsfläche 24 verbunden. Das Element 19 ist als flächiges Gebilde mit einem größeren Strömungswiderstand im Vergleich zur Lamelle aus Fig. 3 realisiert. Dabei erstreckt sich das Element 19 auf einer Fläche von 35 % der Halbkreisfläche 18. Die Höhe des halbmondförmigen Elements 19 dient zum gezielten Anpassen des Strömungswiderstandes und somit der Linearisierung der Ventilkennlinie des Membranventils.

Die Fig. 5 entspricht im Wesentlichen der Fig. 3. Die Anordnung mit einer Membran 5 weist zwei Elemente 19 auf, die einander gegenüber auf je einer Halbkreisfläche 18 angeordnet sind. Das Element 19 ist in diesem Ausführungsbeispiel nierenförmig ausgebildet und erstreckt sich auf einer Fläche von 65 % der Halbkreisfläche 18. Das flächige Gebilde des Elements 19 weist eine Verstärkung aus einem metallischen Werkstoff auf, die mit der Gewebelage 16 verbunden ist. Im Vergleich zur halbmondförmigen Ausbildung des Elements 19 sind hier die der Dichtfläche 17 zugewandte Fläche 24 geradlinig und die Enden abgerundet ausgebildet.

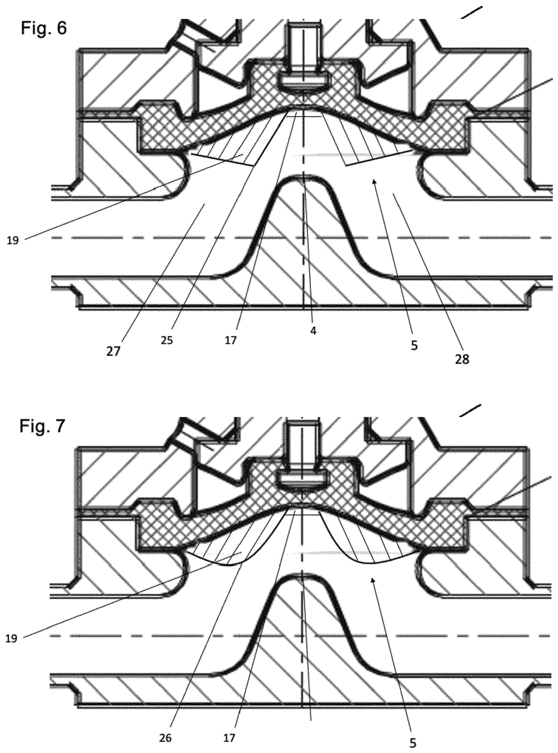

Die Fig. 6 zeigt einen mittigen Detailschnitt eines Membranventils. Die Anordnung mit einer Membran 5 weist eine Dichtfläche 17 auf, die mit dem Sitz 4 als Ventilsitz zusammenwirkt und dabei einen Raum 27 von einem Raum 28 dichtend trennen kann. Auf der Membran 5 sind zwei Elemente 19 spiegelbildlich zueinander und quer zur Strömungsrichtung angeordnet. Die Dichtfläche 17 bildet hierbei die Spiegelachse. Das Element 19 ist in diesem Ausführungsbeispiel halbmondförmig ausgebildet, quer zur Strömungsrichtung ausgerichtet und in Fig. 6 mittig geschnitten dargestellt. Dabei weist das Element 19 einen spitzen Kamm 25 auf, der die Höhe des Elements 19 definiert. Die Höhe des Elements 19 ist um den Faktor 7,5 größer als die Höhe der Dichtfläche 17. Das Element 19 bildet für ein strömendes Fluid eine Strömungsbarriere und führt zu einer linearen Ausbildung der Ventilkennlinie des Membranventils.

In Fig. 7 ist ein Detailschnitt eines Membranventils dargestellt, der weitestgehend der Darstellung in Fig. 6 entspricht. Das Element 19 ist hier nierenförmig ausgebildet und quer zur Strömungsrichtung ausgerichtet. Dabei weist das Element 19 einen abgerundeten Gebildekamm 26 auf, der in Fig. 7 mittig geschnitten dargestellt ist. Die Höhe des Gebildekamms 26 ist um den Faktor 7 größer als die Höhe der Ventilfläche 17. Das Element 19 bildet auch in diesem Ausführungsbeispiel eine Strömungsbarriere für ein strömendes Fluid und führt zu einer gleichprozentigen Ausbildung der Ventilkennlinie des Membranventils.

## Patentansprüche

1. Anordnung mit einer Membran (5), die eine Dichtfläche (17) aufweist, die mit einem Sitz (4) zur Trennung von Räumen (27, 28) zusammenwirkt, **dadurch gekennzeichnet, dass** die Membran (5) eine Fluidkontaktfläche (29) umfasst, auf der mindestens ein Element (19) angeordnet ist, das in einen Raum (27, 28) hineinragt.

2. Anordnung nach Anspruch 1, **dadurch gekennzeichnet, dass** das Element (19) nierenförmig ausgebildet ist.

3. Anordnung nach Anspruch 1 oder 2, **dadurch gekennzeichnet, dass** das Element (19) mindestens eine Öffnung zur Durchströmung aufweist.

4. Anordnung nach einem der Ansprüche 1 bis 3, **dadurch gekennzeichnet, dass** auf zwei bezüglich der Dichtfläche (17) gegenüberliegenden Halbkreisflächen (18) der Fluidkontaktfläche (29) jeweils ein Element (19) angeordnet ist, wobei die Elemente (19) spiegelbildlich zueinander ausgebildet sind.

5. Anordnung nach einem der Ansprüche 1 bis 4, **dadurch gekennzeichnet, dass** das Element (19) einstückig mit der Fluidkontaktfläche (29) ausgebildet ist.

6. Anordnung nach einem der Ansprüche 1 bis 5, **dadurch gekennzeichnet, dass** das Element (19) Verstärkungen aus einem metallischen Material und/oder einem Polymer-Material aufweist.

7. Anordnung nach einem der Ansprüche 1 bis 6, **dadurch gekennzeichnet, dass** das Element (19) sich auf einer Fläche von mehr als 20 %, vorzugsweise mehr als 30 %, insbesondere mehr als 40 %, und/oder weniger als 90 %, vorzugsweise weniger als 80 %, insbesondere weniger als 70 %, der Fluidkontaktfläche (29) erstreckt.

8. Anordnung nach einem der Ansprüche 1 bis 7, **dadurch gekennzeichnet, dass** die Höhe des Elements (19) mehr als Faktor 2, vorzugsweise mehr als Faktor 4, insbesondere mehr als Faktor 6, und/oder weniger als Faktor 12, vorzugsweise weniger als Faktor 10, insbesondere weniger als Faktor 8, in Bezug auf die Höhe der Dichtfläche (17) beträgt.
